# EUROPÄISCHE PATENTSCHRIFT

(11) **EP 3 676 954 B1**
(45) Veröffentlichungstag und Bekanntmachung des Hinweises auf die Patenterteilung: **03.01.2024**
(21) Anmeldenummer: 17777169.8
(22) Anmeldetag: 30.08.2017
(51) Int. Cl.: H02P 27/02, H02P 7/295, H02H 7/085

(54) **ANTRIEB MIT INTEGRIERTER DYNAMISCHER LASTKONTROLLE**
DRIVE WITH INTEGRATED DYNAMIC LOAD CONTROL
ENTRAÎNEMENT À COMMANDE DE CHARGE DYNAMIQUE INTÉGRÉE

(43) Veröffentlichungstag der Anmeldung: 08.07.2020
(73) Patentinhaber: Bauer Gear Motor GmbH, 73734 Esslingen (DE)
(72) Erfinder: SIMON, Karl-Peter, 67269 Grünstadt (DE); TRÜMPLER, Walter, 76227 Karlsruhe (DE)
(74) Vertreter: Prinz & Partner mbB
(86) Internationale Anmeldenummer: PCT/EP2017/071739
(87) Internationale Veröffentlichungsnummer: WO 2019/042537

(56) Entgegenhaltungen:
- DE-A1- 1 613 936
- DE-A1- 10 100 159
- JP-A- S5 875 495
- US-A1- 2011 006 720

## Beschreibung

### GEBIET DER ERFINDUNG

Die Erfindung betrifft einen Antrieb mit einer integrierten dynamischen Lastkontrolle.

### TECHNISCHER HINTERGRUND

Aus dem Stand der Technik sind Überlastkupplungen, also selbsttätige Kupplungen, die durch das übertragene Drehmoment gesteuert werden, bekannt. Die Überlastkupplungen werden beispielsweise im Antriebsstrang zwischen dem Motor und der angetriebenen mechanischen Last eingekoppelt, um die Komponenten des Antriebsstranges zu schützen. Die Überlastkupplung trennt, im Falle einer Überlast, den Motor vom restlichen Antriebsstrang.

Aus dem Stand der Technik, beispielsweise Patentanmeldung JP S58 75495 A, sind weiterhin verschiedene Ausführungen von Motorschutzschaltungen bekannt, welche ein selbsttätiges Abschalten des Motors im Falle einer Überlastung des Motors bewirken. Diese Motorschutzschaltungen sind dabei anschlussseitig, also zwischen Spannungsversorgung und Motor, angeordnet.

Ebenfalls aus dem Stand der Technik bekannt sind elektrische Schaltungen, die zur Verringerung der Anlaufzeit und zur Verbesserung der Energieeffizienz eines Motors automatisch zwischen Stern- und Dreieckschaltung umschalten können.

Beispielhaft hierfür ist die US 2011/0006720 A1 anzuführen, welche die Merkmale des Oberbegriffs des unabhängigen Anspruchs offenbart.

### BESCHREIBUNG

Es ist eine Aufgabe der Erfindung, einen Antrieb mit integrierter dynamischer Lastkontrolle bereitzustellen und dadurch die mechanische Überlastkupplung im Antriebsstrang zwischen Motor und mechanischer Last verzichtbar zu machen. Weitere Aufgaben ergeben sich aus den nachfolgenden Beschreibungen. Zur Lösung der Aufgabe ist erfindungsgemäß ein Antrieb mit integrierter dynamischer Lastkontrolle mit den Merkmalen des Anspruchs 1 vorgesehen.

Gemäß einem Aspekt der Erfindung ist der Drehstromasynchronmotor ein Drehstromasynchronmotor in Sternschaltung.

Drehstromasynchronmotoren weisen in der Regel drei Phasenstränge auf. Jeder Phasenstrang kann eine oder abhängig von der Polpaarzahl auch mehrere Feldwicklungen des Stators umfassen.

Sind die Phasenstränge bei einem Drehstromasynchronmotor in einer Sternschaltung verbunden, weisen die Phasenstränge jeweils zumindest eine Feldwicklung mit einem außenleiterseitigen Wicklungsanfang und einem auf der anderen Seite der Feldwicklung gelegenen Wicklungsende auf. Mit dem Wicklungsende gekoppelte Sternleitungen laufen in einem gemeinsamen Sternpunkt zusammen und sind dort verbunden.

Erfindungsgemäß ist der Drehstromasynchronmotor ein netzgespeister Drehstromasynchronmotor. Mit anderen Worten ist der Drehstromasynchronmotor direkt, also ohne Frequenzumrichter, mit einem Drehstromnetz verbunden.

Gemäß einem weiteren Aspekt der Erfindung umfasst der Antrieb mit integrierter dynamischer Lastkontrolle eine Lastkontrollschaltung.

Die Lastkontrollschaltung weist ein Regelmodul und zumindest einen ersten Strommesser, zumindest einen ersten Spannungsmesser und zumindest einen ersten und einen zweiten Halbleiterschalter auf.

Der erste Strommesser ist ausgebildet, einen ersten Strangstrom in einem ersten Phasenstrang des Motors zu erfassen.

Der erste Spannungsmesser ist ausgebildet, eine erste Strangspannung am ersten Phasenstrang zu erfassen.

Das Regelmodul ist ausgebildet, mittels des ersten Strangstroms und der ersten Strangspannung eine Wirkleistung des ersten Phasenstrangs und insbesondere eine Gesamtwirkleistung des Motors zu berechnen. Die Wirkleistung und insbesondere die Gesamtwirkleistung ist ein guter Indikator über die Auslastung und die korrekte Funktion des Antriebstranges (inklusive der korrekten Funktion der angetriebenen mechanischen Last).

Gemäß der Erfindung sind der erste und zweite Halbleiterschalter in zwei der drei Phasenstränge zwischen dem jeweiligen Wicklungsende und dem Sternpunkt angeordent. In anderen Worten ist der jeweilige Halbleiterschalter sternseitig von der Feldwicklung im Phasenstrang angeordnet. Gleiches kann für weitere Halbleiterschalter in weiteren Phasensträngen gelten.

Die dem Halbleiterschalter netzseitig vorgeschalteten Feldwicklungen bilden einen wirksamen Schutz gegen Störeinflüsse (wie etwa Spannungsspitzen) aus dem Netz. Die Schaltvorgänge der Halbleiterschalter sind damit von dem speisenden Netz entkoppelt. Es können damit Halbeiterschalter mit einer geringeren Spannungsfestigkeit (beispielsweise <1kV) ausgewählt werden, etwa TRIACS (engl.: Triode for Alternating Current).

Gemäß der Erfindung ist das Regelmodul ausgebildet zumindest die zwei der drei Phasenstränge mittels des ersten und zweiten Halbleiterschalters zu unterbrechen. Das Regelmodul wird dabei die zumindest zwei Phasenstränge mittels der Halbleiterschalter dann unterbrechen, wenn es einen fehlerhaften Betriebszustand feststellt. Beispielsweise kann es sich um eine Überlastung oder um eine Blockierung des Antriebstranges, bzw. der angetriebenen mechanischen Last, handeln. Gleiches kann für die weiteren Phasenstränge gelten.

Gemäß der Erfindung erkennt das Regelmodul der fehlerhaften Betriebszustand durch den Vergleich einer gemessenen oder errechneten Kenngröße mit einem vorbestimmten Grenzwert. Der Grenzwert kann einstellbar sein; insbesondere um den Grenzwert an das Lastprofil der angetriebenen mechanischen Last anzupassen. Beispielhaft kann es sich bei der Kenngröße um einen Strangstrom handeln.

Gemäß der Erfindung errechnet das Regelmodul aus Strangspannung und Strangstrom auch eine momentane Wirkleistung des Phasenstrangs. Durch die Addition der momentanen Wirkleistung aller Phasenstränge kann weiterhin die Gesamtwirkleistung des Motors errechnet werden.

Des Weiteren können aus der Gesamtwirkleistung und der Drehzahl des Motors das abgegebene Drehmoment des Antriebs, des Motors und/oder des Antriebsstranges, bzw. seiner Komponenten, und alternativ auch das abgenommene Drehmoment der angetriebenen mechanischen Last bestimmt werden.

Überschreitet die ermittelte Wirkleistung des Phasenstrangs, die Gesamtwirkleistung oder das aus der Gesamtwirkleistung berechnete Drehmoment des Motors einen entsprechenden (einstellbaren) vorbestimmten Grenzwert, steuert das Regelmodul zumindest den ersten und zweiten Halbleiterschalter an, um zumindest die zwei der drei Phasenstränge elektrisch zu unterbrechen.

Wird die Strangspannung und der Strangstrom in nur einem Phasenstrang ermittelt, so ist für die Bestimmung der Gesamtwirkleistung über die halbe Periodendauer oder ein Mehrfaches der halben Periodendauer des Drehstromsystems zu integrieren. Die Messung kann dabei zu jedem beliebigen Zeitpunkt begonnen und beendet werden. In anderen Worten kann die Messung unabhängig von der Phasenlage des Drehstroms stattfinden. Voraussetzung ist jedoch, dass der Messzeitraum einer halben Periodendauer oder einem Vielfachen der halben Periodendauer entspricht. Es ergibt sich daraus ein Zeitverzug von mindestens einer halben Periode, beispielsweise 10 ms bei einem 50 Hz Drehstromsystem.

Werden Strangspannungen und Strangströme jedoch in allen Phasensträngen ermittelt, kann die Gesamtwirkleistung durch die strangweise Multiplikation der momentanen Strangströme und Strangspannungen und die anschließende Addition der momentanen Strangwirkleistungen bestimmt werden. Die Bestimmung der Gesamtwirkleistung kann somit vorteilhaft für jeden Zeitpunkt und quasi sofort bestimmt werden.

Bei einphasiger Messung kann somit eine Überlast in ca. 10 ms erkannt werden. In weniger als 20 ms kann mit der erfindungsgemäßen Lastkontrollschaltung eine Abschaltung erfolgen. Diese sehr kurze Reaktionszeit der Lastkontrollschaltung von weniger als 60 ms und vorteilhaft weniger als ca. 30 ms ist überraschenderweise ausreichend, um den Antriebsstrang und insbesondere auch die angetriebene mechanische Last vor eine Beschädigung im Fehlerfall zu schützen.

Bei einer mehrphasigen Messung in allen Phasen kann eine Überlast sogar quasi verzugsfrei erkannt werden. Eine Abschaltung kann innerhalb von ca. 10 ms stattfinden.

Gemäß einem weiteren vorteilhaften Aspekt der Erfindung kann die Lastkontrollschaltung ferner ein Kommunikationsmodul aufweisen. Das Kommunikationsmodul kann dazu ausgebildet sein, Antriebskenndaten und/der Antriebszustandsdaten an ein entferntes System zu übertragen. Das Kommunikationsmodul kann ferner dazu ausgebildet sein, Kontrolldaten des entfernten Systems zu empfangen.

Das Kommunikationsmodul kann dazu ein Kommunikationsinterface aufweisen. Über das Kommunikationsinterface kann das Kommunikationsmodul mit dem entfernten System kommunizieren. Beispielsweise kann das Kommunikationsinterface an ein Bussystem, an ein Netzwerk, oder an eine Punkt-zu-Punkt-Verbindung, wie beispielsweise bei IO-Link angeschlossen sein.

Die Antriebskenndaten können Motorkenndaten und/oder Getriebekenndaten eines elektronischen Typenschilds des Antriebs umfassen. die Antriebskenndaten können dabei der "eCl@ss" Klassifizierung entsprechen.

Die Antriebszustandsdaten können Lastprofildaten und/oder Zustandsdaten zur vorausschauenden Instandhaltung (Verschleiß-Parameter) umfassen.

Gemäß einem weiteren vorteilhaften Aspekt kann der Antrieb ausgebildet sein, um mittels der Kontrolldaten des entfernten Systems in der Leistung gesteuert zu werden und insbesondere ein- und abgeschaltet zu werden.

Durch das Kommunikationsmodul wird der Antrieb "Industrie 4.0"-tauglich gemacht. Durch die Erhebung von Lastprofilen kann unter Kenntnis historischer Daten auf den zukünftigen Energiebedarf geschlossen werden. Durch diese Daten kann der notwendige Energiebedarf optimiert werden.

Gemäß einem weiteren vorteilhaften Aspekt können die Antriebskenndaten in einem nicht-flüchtigen Speicher abgelegt werden. Der nicht-flüchtige Speicher kann direkt im oder am Antrieb angeordnet sein. Der nicht-flüchtige Speicher kann am Antrieb verbleiben, selbst wenn beispielsweise die Lastkontrollschaltung aufgrund eines Defekts ausgetauscht werden muss. Die Lastkontrollschaltung kann eingerichtet sein, den nicht-flüchtigen Speicher auszulesen und die Antriebskenndaten zu übernehmen.

Gemäß einem weiteren vorteilhaften Aspekt der Erfindung kann der erste Strommesser ausgebildet und angeordnet sein, um den ersten Strangstrom in dem ersten Phasenstrang zwischen dem Wicklungsende und dem Sternpunkt zu erfassen. In anderen Worten kann der gesamte Strommesser oder zumindest eine Strommesssonde des Strommessers sternseitig der Feldwicklung zwischen Wicklungsende und Sternpunkt angeordnet sein.

Gemäß einem weiteren vorteilhaften Aspekt der Erfindung kann der erste Strommesser den ersten Strangstrom mittels eines ersten Shunts ermitteln. Der erste Shunt kann in dem ersten Phasenstrang in Reihenschaltung zwischen dem Wicklungsende und dem Sternpunkt angeordnet sein. Die Strommessung über einen Shuntwiderstand ist vergleichsweise simpel. Bei großen Antriebsleistungen ist die Verlustleistung an den Shunts jedoch entsprechend groß. Bei großen Antriebsleistungen ist der Strangstrom deshalb vorzugsweise nach einem anderen Messprinzip zu ermitteln.

Aus diesem Grund kann es bei großen Antriebsleistungen (mehrere Kilowatt; beispielsweise Motoren mit einer Antriebsleistung von mehr als 3 kW) sinnvoll sein, nur in einem Phasenstrang den Strangstrom und die Strangspannung zu ermitteln.

Gemäß einem weiteren vorteilhaften Aspekt der Erfindung kann der erste Spannungsmesser ausgebildet sein, die erste Strangspannung im ersten Phasenstrang an der Feldwicklung zu erfassen.

Vorteilhafterweise wird dafür die Potenzialdifferenz zwischen dem Wicklungsanfang der Feldwicklung und dem Sternpunkt, bzw. zwischen dem Außenleiter und dem Sternleiter gemessen. Auf diese Weise kann die Strom- und Spannungsmessung bei dem gleichen Bezugspotenzial (im Sternpunkt) stattfinden und entsprechend ohne Potenzialtrennung vorgenommen werden.

Gemäß einem weiteren vorteilhaften Aspekt der Erfindung kann die Lastkontrollschaltung ferner einen ersten Spannungsteiler aufweisen. Der erste Spannungsteiler kann der Feldwicklung des ersten Phasenstranges parallel geschaltet sein. Der erste Spannungsteiler kann einen ersten Widerstand und einen zweiten Widerstand aufweisen. Durch den Spannungsteiler kann die Strangspannung direkt gegen das gemeinsame Bezugspotenzial im Sternpunkt gemessen werden. Eine Potenzialtrennung ist deshalb nicht notwendig.

Gemäß einem weiteren vorteilhaften Aspekt der Erfindung kann die Lastkontrollschaltung in Bezug auf die weiteren Phasenstränge so angeordnet und ausgebildet sein, dass sie der Konfiguration in Bezug auf den ersten Phasenstrang entspricht.

So kann der erste Strommesser ausgebildet sein, um in jeden Phasenstrang jeweils einen zugehörigen Strangstrom zu erfassen.

Der erste Spannungsmesser kann ausgebildet sein, um an jeden Phasenstrang jeweils eine zugehörige Strangspannung zu erfassen.

Das Regelmodul kann dazu ausgebildet sein, um mittels der jeweiligen Strangströme und der jeweiligen Strangspannung eine Gesamtwirkleistung zu berechnen.

Die Messung der Strangströme und Strangspannungen in allen Phasensträngen ermöglicht die sofortige Ermittlung der Gesamtwirkleistung und die sehr schnelle Überlasterkennung innerhalb weniger Millisekunden. Diese sehr kurze Reaktionszeit der Lastkontrollschaltung (kürzer als ca. 60 ms; vorteilhaft kürzer als ca. 30 ms) ist überraschenderweise ausreichend, um den Antriebsstrang und insbesondere auch die angetriebene mechanische Last vor eine Beschädigung im Fehlerfall zu schützen.

Gemäß einem vorteilhaften Aspekt kann in allen Phasensträngen zwischen den jeweiligen Wicklungsenden und dem Sternpunkt ein zugehöriger Halbleiterschalter angeordnet sein. Vorteilhaft kann das Regelmodul ausgebildet sein, bei einer erkannten Grenzwertüberschreitung alle Phasenstränge mittels der Halbleiterschalter zu unterbrechen. Hierdurch kann der gesamte Motor innerhalb kürzester Zeit stromlos geschaltet und die Feldwicklungen können im Sternpunkt unterbrochen werden. Dies führt zu einer im Wesentlichen verzögerungsfreien freien Rotation des Rotors. Der Antriebsstrang wird sofort entlastet.

Die Grenzwertüberschreitung kann eine Grenzwertüberschreitung der Gesamtwirkleistung oder eine Grenzwertüberschreitung eines aus der Gesamtwirkleistung berechneten Drehmoments sein.

Gemäß einem vorteilhaften Aspekt kann die Lastkontrollschaltung für jeden weiteren Phasenstrang jeweils einen zugehörigen Strommesser, einen zugehörigen Spannungsmesser und einen zugehörigen Halbleiterschalter aufweisen.

Die jeweils zugehörigen Strommesser können ausgebildet sein, um in den Phasensträngen jeweils einen zugehörigen Strangstrom zu erfassen. Die jeweils zugehörigen Spannungsmesser können dazu ausgebildet sein, an den Phasensträngen jeweils eine zugehörige Strangspannung zu erfassen. Das Regelmodul kann ausgebildet sein, um mittels der jeweiligen Strangströme und der jeweiligen Strangspannung eine Gesamtwirkleistung zu berechnen. In allen Phasensträngen kann zwischen den jeweiligen Wicklungsenden und dem Sternpunkt ein zugehöriger Halbleiterschalter angeordnet sein.

Gemäß einem weiteren vorteilhaften Aspekt der Erfindung kann das Regelmodul ausgebildet sein, um die Halbleiterschalter als Leistungssteller anzusteuern. Das Regelmodul kann dazu ausgebildet sein, um die Halbleiterschalter derart anzusteuern, dass die Effektivspannung in den Phasensträngen mittels der Halbleiterschaltung durch eine Phasenanschnittsteuerung einstellbar ist.

Dabei kann das Regelmodul eine Sanftanlaufsteuerung aufweisen. Die Sanftanlaufsteuerung kann dazu ausgebildet sein, die Effektivspannung in den Phasensträngen beim Einschalten des Motors zu reduzieren und über eine vorbestimmte Zeitdauer bis zu der vollen Netzspannung zu erhöhen. Auf diese Weise kann der Anlaufstrom begrenzt werden.

Zusätzlich oder alternativ kann das Regelmodul eine Teillaststeuerung aufweisen. Die Teillaststeuerung kann dazu ausgebildet sein, aus der Wirkleistung und einer Motornennleistung einen Teillastfaktor zu bestimmen. Bei einer festgestellten Unterschreitung eines Teillastfaktorgrenzwertes kann das Regelmodul die Effektivspannung in den Phasensträngen mittels der Halbleiterschalter als Leistungssteller entsprechend absenken. Auf diese Weise kann der Wirkungsgrad des Motors im Teillastbetrieb erhöht werden.

Gemäß einem weiteren vorteilhaften Aspekt der Erfindung können alle gemessenen Strangströme und alle gemessenen Strangspannungen gegen einen gemeinsamen Bezugspunkt (bzw. ein gemeinsames Bezugspotenzial) gemessen werden. Bei dem gemeinsamen Bezugspunkt bzw. Bezugspotenzial kann es sich um den Sternpunkt bzw. das Potenzial des Sternpunktes handeln.

Der Bezugspunkt kann natürlich durch eine Leitung oder ein Netzwerk von Leitungen, insbesondere die Sternleitungen gebildet werden. Bei der Messung der Strangspannungen gegen den gemeinsamen Bezugspunkt kann die gemessene Spannung direkt zur Leistungsberechnung verwendet werden.

Dadurch, dass alle Messungen gegen einen gemeinsamen Bezugspunkt gemessen werden ist keine Potenzialtrennung in der Lastkontrollschaltung notwendig. Durch die sternseitige Anordnung können ergänzende Maßnahmen zum Überspannungsschutz in der Regel entfallen oder sind zumindest vergleichsweise einfach zu erreichen.

Gemäß einem weiteren vorteilhaften Aspekt der Erfindung können die Halbleiterschaltungen mittels eines Steuersignals angesteuert werden. Das Steuersignal kann durch das Regelmodul gebildet werden. Das Steuersignal kann zum Beispiel eine Potenzialdifferenz gegen das Bezugspotenzial sein.

Das Steuersignal kann von einer Gate-Treiber-Schaltung gebildet werden. Das Regelmodul kann die Gate-Treiber-Schaltung ansteuern. Auch dieser Aspekt ermöglicht die Lastkontrollschaltung weitgehend ohne Potenzialtrennung auszuführen.

Vorteilhaft kann die Lastkontrollschaltung aus der Versorgungsspannung des Motors oder durch das Kommunikationsinterface mit Energie versorgt werden. Gegebenenfalls ist dafür ein entsprechender Spannungswandler in der Lastkontrollschaltung vorzusehen.

Gemäß einem weiteren vorteilhaften Aspekt der Erfindung kann die Lastkontrollschaltung an, bei oder vorzugsweise in einem Motorklemmenkasten des Motors und insbesondere im Deckel des Motorklemmenkasten angeordnet sein. Auf diese Weise kann die Lastkontrollschaltung ohne weitere Änderungen am Motor sternseitig in die Phasenstränge eingekoppelt werden.

### BESCHREIBUNG DER FIGUREN

Im Folgenden werden die Merkmale und Aspekte der Erfindung anhand von Ausführungsbeispielen und unter Bezugnahme auf die Figuren näher erläutert, dabei zeigt
- Figur 1 ein vereinfachtes schematisches Blockschaltbild eines Antriebs mit einer Lastkontrollschaltung,
- Figur 2 ein weiteres vereinfachtes schematisches Blockschaltbild eines Antriebs mit einer Lastkontrollschaltung,
- Figur 3 einen Drehstromasynchronmotor mit einer Lastkontrollschaltung, und
- Figur 4 einen Antriebsstrang.

### DETAILLIERTE BESCHREIBUNG

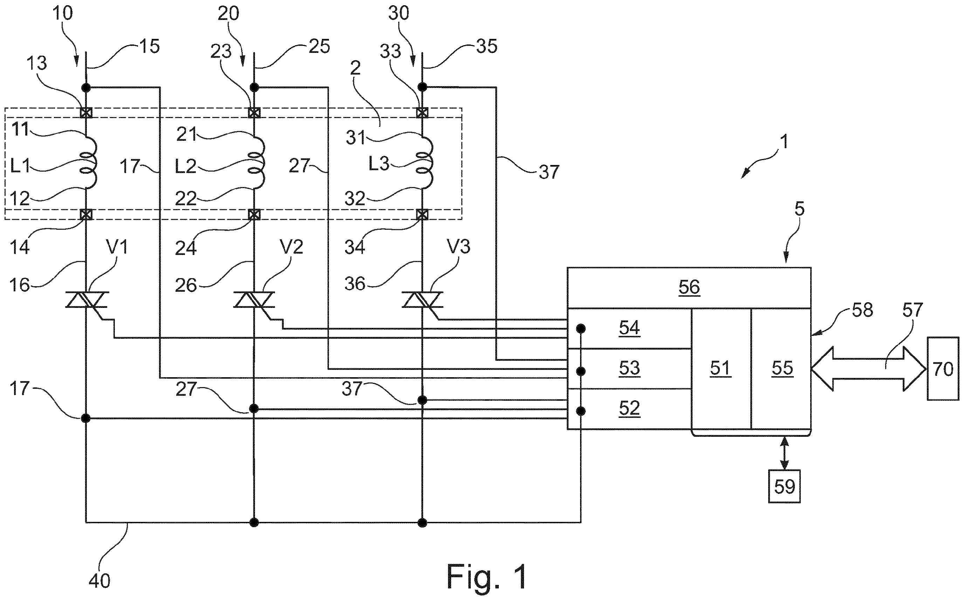

Fig. 1 zeigt ein vereinfachtes Blockschaltbild eines Antriebs 1 mit einer erfindungsgemäßen Lastkontrollschaltung 5 für ein Drehstromasynchronmotor 2 mit mehreren Phasensträngen 10, 20, 30 in Sternschaltung.

Ein Drehstromasynchronmotor 2 kann drei oder mehr Phasenstränge 10, 20, 30 aufweisen. Die Anzahl der Phasenstränge ist dabei abhängig vom Drehstromsystem bzw. der Anzahl der Phasen des Drehstromsystems und gegebenenfalls auch von der Polpaarzahl des Drehstromasynchronmotors.

Ein Drehstromasynchronmotor weist einen ortsfesten Stator und einen beweglichen Rotor auf. Der Rotor kann mit einem rotatorischen Freiheitsgrad um eine Rotationsachse drehen, wobei er durch ein rotierendes Magnetfeld angetrieben wird. Das rotierende Magnetfeld wird durch um den Rotor herum angeordneten Feldwicklungen L1, L2, L3 des Stators erzeugt.

Der dargestellte Motor 2 weist drei Feldwicklungen L1, L2, L3 auf, welche jeweils in separaten Phasensträngen 10, 20, 30 des Motors liegen.

Ein Phasenstrang 10, 20, 30 umfasst jeweils einen Außenleiter 15, 25, 35, die Feldwicklungen L1, L2, L3 und Sternleitungen 16, 26, 36, welche in einem Sternpunkt 40 verbunden sind. Der Sternpunkt ist dabei nicht zwingend tatsächlich als Punkt zu verstehen, sondern kann auch, wie gezeigt, durch ein verbundenes Leitungssystem (hier der Sternleitungen 16, 26, 36) mit einem gemeinsamen (Stern-) Potenzial gebildet werden.

Die Feldwicklungen L1, L2, L3 werden auch als Erregerwicklungen bezeichnet. Die Feldwicklungen L1, L2, L3 weisen jeweils ein Wicklungsanfang 11, 21, 31 und ein Wicklungsende 12, 22, 32 auf. Die Außenleiter 15, 25, 35 sind mit den Wicklungsanfängen 11, 21, 31 der jeweiligen Wicklungsstränge 10, 20, 30 elektrisch verbunden.

Die Verbindung vom Außenleiter 15, 25, 35 und Wicklungsanfang 11, 21, 31 kann durch Außenleiterklemmen 13, 23, 33 gebildet werden. Tatsächlich muss es sich dabei aber nicht zwingend um Klemmen im eigentlichen Sinn handeln, weswegen häufig auch von einem Außenleiteranschlusspunkt gesprochen wird. Alternativ können die Außenleiterklemmen 13, 23, 33 auch als Wicklungsanfangsklemme bezeichnet werden.

Auf der den Außenleitern 15, 25, 35 abgewandten Seite der Feldwicklungen L1, L2, L3 liegt das jeweilige Wicklungsende 12, 22, 32. An die Wicklungsenden 12, 22, 32 schließen sich die jeweiligen Sternleitungen 16, 26, 36 an. Die Wicklungsenden 12, 22, 32 und die jeweiligen Sternleitungen 16, 26, 36 sind in einem Sternleitungsanschlusspunkt 14, 24, 34, auch als Wicklungsendanschlusspunkt oder Wicklungsendklemmen bezeichnet, verbunden.

Zwischen dem Wicklungsende 12 der ersten Feldwicklung L1 und dem Sternpunkt 40 ist im ersten Antriebsstrang 10 ein erster Halbleiterschalter V1 angeordnet. Anders ausgedrückt kann durch den ersten Halbleiterschalter V1 die Sternleitung 16 selektiv unterbrochen werden.

Neben dem ersten Halbleiterschalter V1 ist im oder am ersten Phasenstrang 10 des Weiteren ein erster Strommesser 52 beziehungsweise eine Strommessonde 17 des Strommessers 52 angeordnet.

Vorteilhaft kann die erste Strommesssonde 17 im ersten Phasenstrang 10 zwischen dem Wicklungsende 12 und dem Sternpunkt 40 angeordnet sein. Mit anderen Worten kann die Strommesssonde 17 in oder an der Sternleitung 16 angeordnet sein.

Bei der ersten Strommessonde 17 kann es sich beispielsweise um einen Shunt handeln. Zwar können auch Hall-Stromsensoren oder Fluxgate-Sensoren verwendet werden, diese sind jedoch teurer und aufwändiger. Zudem ist aufgrund der vorteilhaften Wahl des Sternpunktes als Bezugspotential keine Potentialtrennung durch den Sensor notwendig.

In vergleichbarer Weise sind auch der zweite Phasenstrang und der dritte Phasenstrang aufgebaut:
Über eine Anschlussleitung 25 ist die zweite Feldwicklung L2 an eine Energieversorgung, ein Drehstromnetz, angeschlossen. Außenleiterseitig, also auf Seite des Außenleiters 25 findet sich der Wicklungsanfang 21. Außenleiter 25 und Feldwicklung L2 sind in einem Außenleiteranschlusspunkt 23 (auch Außenleiterklemme genannt) leitend verbunden. Auf der zweiten Seite der Feldwicklung L2 findet sich das Wicklungsende 22, welches in einem Sternleitungsanschlusspunkt 24 (auch Wicklungsendanschlusspunkt oder Wicklungsendklemme genannt) mittels einer Sternleitung 26 in einem Sternpunkt 40 mit den jeweils anderen Sternleitungen 16, 36 der jeweils anderen Phasensträngen 10, 30 verbunden ist.

Auch der zweite Phasenstrang kann durch einen zweiten Halbleiterschalter V2 zwischen dem Wicklungsende 22 und dem Sternpunkt 40 unterbrochen werden.

Eine zweite Strommessonde 27 des Strommessers 52 misst den Strangstrom im zweiten Phasenstrang 20, und zwar im Bereich der zweiten Sternleitung 26.

In analoger Weise weist der dritte Phasenstrang 30 eine dritte Außenleiter 35, eine Außenleiterklemme 33 und eine dritte Feldwicklung L3 mit einem Wicklungsanfang 31 und einem Wicklungsende 32, eine Wicklungsendklemme 34 und eine dritte Sternleitung 36 mit einem dritten Halbleiterschalter V3 und einer dritten Strommesssonde 37 auf.

Der Aufbau des zweiten und auch des dritten Phasenstranges 20, 30 entspricht somit dem Aufbau des ersten Phasenstranges 10.

Die erste Sternleitung 16, die zweite Sternleitung 26 und die dritte Sternleitung 36 sind in einem Sternpunkt 40 elektrisch verbunden. Sie weisen somit ein gemeinsames Bezugspotenzial auf.

Alternativ zu einem einzigen ersten Strommesser 52 kann die Lastkontrollschaltung 5 auch jeweils separate Strommesser für die weiteren Phasenstränge aufweisen.

Ein erster Spannungsmesser 53 der Lastkontrollschaltung 5 misst die Strangspannungen am ersten Phasenstrang 10, am zweiten Phasenstrang 20 und am dritten Phasenstrang 30. Gemessen wird hierbei die Potenzialdifferenz zwischen den Außenleitern 15, 25, 35 und dem gemeinsamen Sternpunkt 40. Hierzu werden die momentanen Außenleiterpotenziale mittels der Messleitungen 17, 27, 37 vom Spannungsmesser 53 aufgenommen und mit dem Sternpunktpotenzial im Sternpunkt 40 verglichen.

Ein Regelmodul 51 verarbeitet die von den Strom- und Spannungsmessern gewonnen Daten weiter und berechnet eine Wirkleistung in den Phasensträngen 1, 2 und/oder 3.

Werden Strangstrom und Strangspannung von nur einem Phasenstrang gemessen, wird zur Ermittlung der Gesamtwirkleistung die Wirkleistung über die Periodendauer einer Halbwelle oder eines Vielfachen davon ermittelt und anschließend mit der Anzahl der Phasenstränge multipliziert.

Vorteilhaft werden jedoch Phasenströme und Phasenspannungen in jeder der Phasenstränge gemessen.

Durch die Multiplikation der momentanen Strangströme und der jeweiligen zugehörigen momentanen Strangspannung kann für jeden der Phasenstränge eine momentane Wirkleistung ermittelt werden. Durch die Addition der momentanen Wirkleistung für alle Phasenstränge 10, 20, 30 lässt sich sofort (also ohne erst über zumindest eine Halbwelle des Drehstromsystems integrieren zu müssen) auf die Gesamtwirkleistung schließen.

Weiterhin lässt sich aus der Gesamtwirkleistung unter Kenntnis oder Abschätzung der Motordrehzahl, gegebenenfalls unter Beachtung eines angeschlossenen Getriebes, direkt das abgegebene Drehmoment errechnen.

Aus dem Vergleich eines vordefinierten Grenzwertes mit der Wirkleistung, der Gesamtwirkleistung oder des aus der Gesamtwirkleistung berechneten Drehmoments kann das Regelmodul eine Grenzwertüberschreitung feststellen und aus der Grenzwertüberschreitung auf einen fehlerhaften Betriebszustand des Antriebstranges und/oder der angetriebenen mechanischen Last schließen.

Neben dem Regelmodul 51, dem Strommesser 52 und dem Spannungsmesser 53 weist die Lastkontrollschaltung 5 auch eine Gate-Treiber-Schaltung 54 auf, welcher die Halbleiterschalter V1, V2, V3 ansteuert. Als Steuersignal kann eine Potenzialdifferenz zu dem gemeinsamen Bezugspotenzial im Sternpunkt 40 genutzt werden.

Das Regelmodul ist ausgebildet, die Halbleiterschalter V1, V2, V3 als Leistungssteller der jeweiligen Phasenstränge 10, 20, 30 anzusteuern.

Effektivspannung in den jeweiligen Phasensträngen 10, 20, 30 lassen sich dabei durch eine Phasenanschnittssteuerung mittels der Halbleiterschalter V1, V2, V3 einstellen.

Das Regelmodul weist eine Sanftanlaufsteuerung und eine Teillaststeuerung auf.

Die Sanftanlaufsteuerung ist dazu ausgebildet, die Effektivspannung in den jeweiligen Phasensträngen beim Einschalten zu reduzieren und über eine vorbestimmte Zeitdauer bis zur vollen Netzspannung zu erhöhen. Dies kann über eine Phasenanschnittsteuerung oder über eine Pulsweitenmodulation geschehen.

Die Teillaststeuerung ist ausgebildet aus der Wirkleistung und einer Motornennleistung ein Teillastfaktor zu bestimmen. Bei eine festgestellten Unterschreitung eines Teillastfaktorgrenzwertes werden die Effektivspannungen in den Phasensträngen entsprechend abgesenkt. Die Absenkung der Effektivspannung kann proportional zu der Unterschreitung des Teillastfaktorgrenzwertes sein.

Die Lastkontrollschaltung 5 kann einen DC-DC Wandler 56 zur Spannungsanpassung umfassen.

Die Lastkontrollschaltung 5 weist weiterhin ein Kommunikationsmodul 55 auf. Das Kommunikationsmodul umfasst ein Kommunikationsinterface 58. Durch das Kommunikationsinterface 58 kann das Kommunikationsmodul 55 eine Datenverbindung 57 mit bzw. in einem (entfernten) System 70 aufbauen.

Die Datenverbindung 57 kann vom Kommunikationsmodul 55 über ein Netzwerk, ein Feldbus, oder eine Punkt-zu-Punkt-Verbindung aufgebaut werden. Das Kommunikationsmodul stellt über die Datenverbindung 57 Motorkenndaten und/oder Motorzustandsdaten bereit, welche wiederum vom Regelmodul vorgehalten werden.

Die Energieversorgung der Lastkontrollschaltung 5 kann entweder über das Drehstromsystem des Motors oder über die Datenverbindung 57 bereitgestellt werden. Beispielsweise kann die Datenverbindung ein IO-Link sein, oder eine Netzwerkverbindung mit Power-over-Ethernet.

Die Lastkontrollschaltung 5 umfasst einen entsprechenden Spannungswandler um die Strom- und Spannungsmesser 52, 53, das Regelmodul 51, die Gate-Treiber-Schaltung 54 und das Kommunikationsmodul 55 mit Energie zu versorgen.

Über das Kommunikationsinterface 58 kann das Kommunikationsmodul 55 mit einem entfernten System kommunizieren. Beispielsweise kann das Kommunikationsinterface 58 an ein Bussystem, an ein Netzwerk, oder an eine Punkt-zu-Punkt-Verbindung, wie beispielsweise bei IO-Link angeschlossen sein.

Durch das Kommunikationsmodul 55 wird der Antrieb "Industrie 4.0"-tauglich gemacht. Durch die Erhebung von Lastprofilen kann unter Kenntnis historischer Daten auf den zukünftigen Energiebedarf geschlossen werden. Durch diese Daten kann der notwendige Energiebedarf optimiert werden.

Gemäß einem weiteren vorteilhaften Aspekt können die Antriebskenndaten in einem, bspw. nicht-flüchtigen Speicher 59 abgelegt werden. Der nicht-flüchtige Speicher 59 kann direkt im oder am Antrieb 1 angeordnet sein. Der nicht-flüchtige Speicher 59 kann am Antrieb 1 verbleiben, selbst wenn beispielsweise die Lastkontrollschaltung 5 aufgrund eines Defekts ausgetauscht werden muss. Die Lastkontrollschaltung 5 kann eingerichtet sein, den nicht-flüchtigen Speicher 59 auszulesen und Antriebskenndaten zu übernehmen

Die Antriebskenndaten können Motorkenndaten und/oder Getriebekenndaten eines elektronischen Typenschilds des Antriebs 1 umfassen. die Antriebskenndaten können dabei der "eCl@ss" Klassifizierung entsprechen.

Die Antriebszustandsdaten können Lastprofildaten und/oder Zustandsdaten zur vorausschauenden Instandhaltung (Verschleiß-Parameter) umfassen.

Gemäß einem weiteren vorteilhaften Aspekt kann der Antrieb 1 ausgebildet sein, um mittels der Kontrolldaten des entfernten Systems 70 über die Datenverbindung 57 in der Leistung gesteuert zu werden und insbesondere ein- und abgeschaltet zu werden.

Alternativ zu der gezeigten Anordnung mit einem ersten Spannungsmesser 53 und einem ersten Strommesser 52, welcher zumindest die Strangspannung und den Strangstrom in einem ersten Phasenstrang 10 misst und im gezeigten Ausführungsbeispiel neben der ersten Strangspanne und dem ersten Strangstrom auch Strangspannung und Strangströme für die weiteren Phasenstränge misst, kann die Lastkontrollschaltung auch für jede der Phasenstränge 10, 20, 30 jeweils separate Spannungsmesser 53 und Strommesser 52 aufweisen (nicht dargestellt).

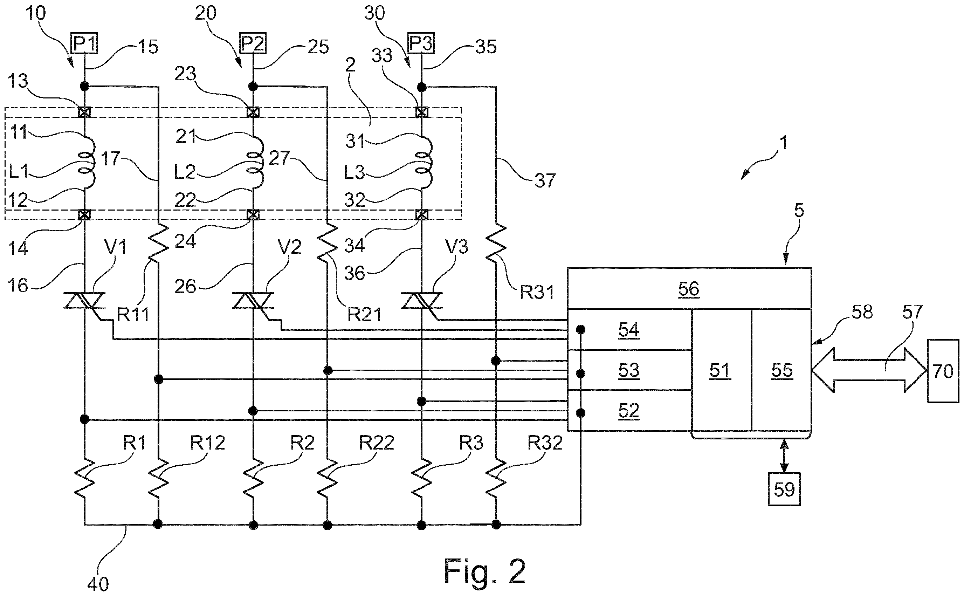

Fig. 2 zeigt ebenfalls einen Antrieb 1 mit einem Motor 2 und einer Lastkontrollschaltung 5 als vereinfachtes Blockschaltbild.

Die Konfiguration der Lastkontrollschaltung entspricht im Wesentlichen der Lastkontrollschaltung 5 von Fig. 1, wobei im Weiteren nur auf die Unterschiede eingegangen werden soll. Gleiche oder vergleichbare Merkmale sind mit gleichen Bezugszeichen versehen.

Die Strommesssonden 17, 27, 37 sind vorliegend durch die Shuntwiderstände R1, R2, R3 gebildet. Die Shuntwiderstände R1, R2, R3 sind mit den jeweiligen Phasensträngen 10, 20, 30 in Reihe geschaltet und sternseitig im Sternpunkt 40 verbunden. Der jeweilige Strangstrom wird aus den über den Shuntwiderständen R1, R2, R3 abfallenden Shuntspannungen ermittelt. Durch die Schaltungsanordnung wird hierbei das Sternpunktpotenzial als gemeinsames Bezugspotenzial genutzt.

Die jeweiligen Strangspannungen an den Phasensträngen 10, 20, 30 bzw. konkreter über den Feldwicklungen L1, L2, L3 wird vom Spannungsmesser 53 mittels parallel zu den Phasensträngen geschalteten Spannungsteiler ermittelt.

Die Spannungsteiler 17, 27, 37 weisen dabei jeweils einen ersten Widerstand R11, R21, R31 und einen zweiten Widerstand R12, R22, R32 auf. Die ersten Widerstände R11, R21, R31 sind dabei mit den jeweiligen Außenleitern 15, 25, 35 verbunden und die jeweils zu den ersten Widerständen R11, R21, R31 in Reihe geschalteten zweiten Widerständen R12, R22, R32 sind im Sternpunkt 40 verbunden und liegen somit ebenfalls an dem gemeinsamen Bezugspotenzial. Durch den Spannungsmesser 53 wird die über den jeweils zweiten Widerständen R12, R22, R32 abfallende Spannung gemessen.

Auf diese Weise können sowohl die Strom-, wie auch die Spannungsmesser kostengünstig als Spannungsmesser ausgeführt sein. Durch das gemeinsame Bezugspotenzial kann eine Potenzialtrennung unterbleiben.

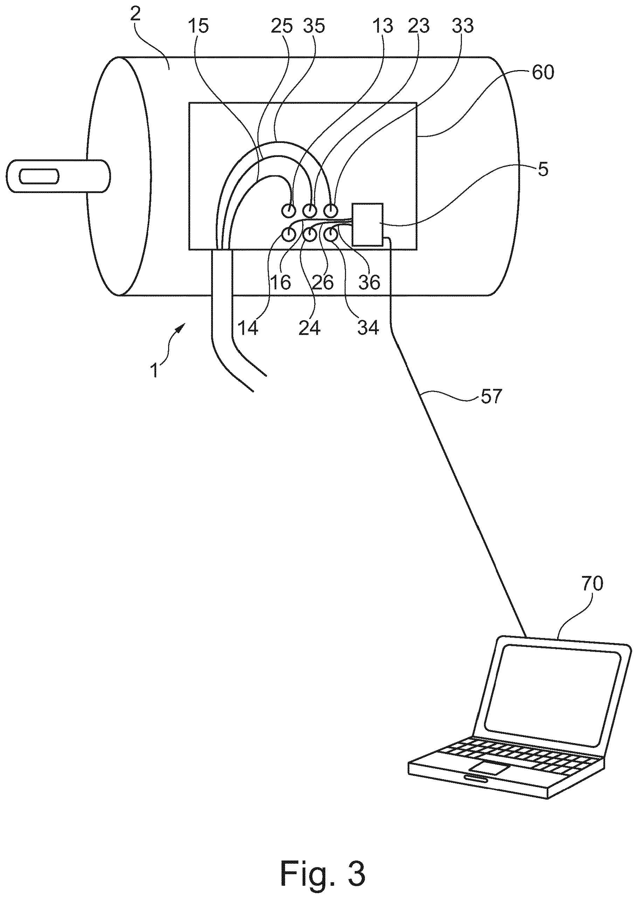

Fig. 3 zeigt einen Motor eins Antriebs mit einer erfindungsgemäßen Lastkontrollschaltung im Motorklemmkasten. Durch die Anordnung im Motorklemmkasten 60 kann die Lastkontrollschaltung 5 direkt an den jeweiligen Außenleiterklemmen und Wicklungsendklemmen des Motors 2 angeschlossen werden, so dass eine weitergehende konstruktive Anpassung des Motors 2 selbst nicht notwendig ist.

Die Außenleiter 15, 25, 35 sind mit den Außenleiterklemmen 13, 23, 33 verbunden. Sternleitungen 16, 26, 36 sind mit den Wicklungsendklemmen 14, 24, 34 verbunden und führen zur Lastkontrollschaltung 5. Die Lastkontrollschaltung 5 ist zusammen mit den Außenleiterklemmen und den Wicklungsendklemmen im Klemmkasten 60 untergebracht. Eine Kommunikationsleitung 57 führt zu einem entfernten System 70.

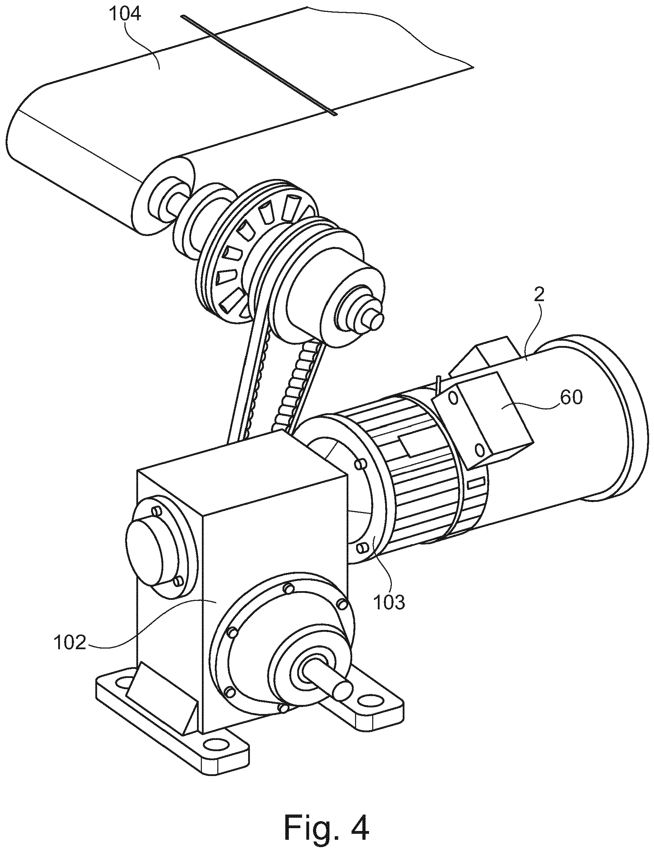

FIG. 4 zeigt einen Antriebsstrang mit einem Motor 2. Ein Getriebe 102 ist zwischen dem Motor 2 und der angetriebenen mechanischen Last 104 eingekoppelt. Zwischen dem Motor 2 und dem Getriebe 102 ist eine Überlastkupplung 103 eingekoppelt.

Der Motor 2 weist einen Klemmenkasten 60 auf.

Die Einheit aus Motor 2 und Getriebe 102 kann ebenso wie ein Motor ohne Getriebe als Antrieb im Sinne der vorliegenden Beschreibung verstanden werden. Vorzugsweise ist in dem Klemmenkasten 60 die Lastkontrollschaltung 5 untergebracht. Die gezeigte Überlastkupplung 103 ist somit entbehrlich und kann entfallen.

Natürlich kann der Antrieb, bzw. der Antriebstrang auch ohne Getriebe ausgeführt sein. Das dargestellte Getriebe 102 entfällt dann.

## Patentansprüche

1. Antrieb (1) mit integrierter dynamischer Lastkontrolle, umfassend:
einen netzgespeisten Drehstromasynchronmotor (2) mit drei Phasensträngen (10, 20, 30) in Sternschaltung, wobei die Phasenstränge (10, 20, 30) jeweils zumindest eine Feldwicklung (L1, L2, L3) mit einem außenleiterseitigen Wicklungsanfang (11, 21, 31) und einem Wicklungsende (12, 22, 32) aufweisen und in einem gemeinsamen Sternpunkt (40) verbunden sind;
eine Lastkontrollschaltung (5) mit einem Regelmodul (51) und zumindest einem ersten Strommesser (52), zumindest einem ersten Spannungsmesser (53) und zumindest einem ersten und einem zweiten Halbleiterschalter (V1, V2);
wobei der erste Strommesser (52) ausgebildet ist, um einen ersten Strangstrom in einem ersten Phasenstrang (10) des Motors (2) zu erfassen,
wobei der erste Spannungsmesser (53) ausgebildet ist, um eine erste Strangspannung am ersten Phasenstrang (10) zu erfassen, und
**dadurch gekennzeichnet, dass** das Regelmodul (51) ausgebildet ist, um mittels des ersten Strangstroms und der ersten Strangspannung eine Wirkleistung des ersten Phasenstrangs (10) und insbesondere eine Gesamtwirkleistung des Motors (2) zu berechnen; und
wobei der erste und der zweite Halbleiterschalter (V1, V2) in zwei der drei Phasenstränge (10, 20, 30) zwischen dem jeweiligen Wicklungsende (12, 22, 32) und dem Sternpunkt (40) angeordnet sind, und
wobei das Regelmodul (51) ausgebildet ist, zumindest die zwei der drei Phasenstränge (10, 20, 30) mittels des ersten und des zweiten Halbleiterschalters (V1, V2) zu unterbrechen, wenn das Regelmodul (51) durch Feststellung einer Grenzwertüberschreitung einen fehlerhaften Betriebszustand erkennt, und wobei die Grenzwertüberschreitung eine Grenzwertüberschreitung der Wirkleistung, der Gesamtwirkleistung oder eines aus der Gesamtwirkleistung berechneten Drehmoments ist.

2. Antrieb (1) gemäß Anspruch 1, wobei der erste Strommesser (52) ausgebildet ist, um den ersten Strangstrom in dem ersten Phasenstrang (10) zwischen dem Wicklungsende (12) und dem Sternpunkt (40) zu erfassen.

3. Antrieb (1) gemäß Anspruch 2, wobei der erste Strommesser (52) den ersten Strangstrom mittels eines ersten Shunts (R1) ermittelt, und insbesondere wobei der erste Shunt (R1) in dem ersten Phasenstrang (10) in Reihenschaltung zwischen dem Wicklungsende (12) und dem Sternpunkt (40) angeordnet ist.

4. Antrieb (1) gemäß einem der vorherigen Ansprüche, wobei der erste Spannungsmesser (53) ausgebildet ist, um die erste Strangspannung im ersten Phasenstrang (10) zwischen dem Wicklungsanfang (11) der Feldwicklung (L1) und dem Sternpunkt (40) zu erfassen.

5. Antrieb (1) gemäß einem der vorherigen Ansprüche,
wobei der erste Strommesser (52) ausgebildet ist, um in jedem Phasenstrang (10, 20, 30) jeweils einen zugehörigen Strangstrom zu erfassen,
wobei der erste Spannungsmesser (53) ausgebildet ist, um an jedem Phasenstrang (10, 20, 30) jeweils eine zugehörige Strangspannung zu erfassen, und
wobei das Regelmodul (51) ausgebildet ist, um mittels der jeweiligen Strangströme und der jeweiligen Strangspannungen eine Gesamtwirkleistung zu berechnen; und
wobei das Regelmodul (51) ausgebildet ist, bei einer erkannten Grenzwertüberschreitung zumindest zwei der drei Phasenstränge (10, 20, 30) und insbesondere alle Phasenstränge mittels der Halbleiterschalter (V1, V2, V3) zu unterbrechen.

6. Antrieb (1) gemäß Anspruch 5, wobei in allen Phasensträngen (10, 20, 30) zwischen den jeweiligen Wicklungsenden (12, 22, 32) und dem Sternpunkt (40) jeweils ein Halbleiterschalter (V1, V2, V3) angeordnet ist, wobei das Regelmodul (51) ausgebildet ist, die Halbleiterschalter (V1, V2, V3) als Leistungssteller derart anzusteuern, dass Effektivspannungen in den Phasensträngen (10, 20, 30) mittels der Halbleiterschalter (V1, V2, V3) durch eine Phasenanschnittsteuerung einstellbar sind.

7. Antrieb (1) gemäß Anspruch 6, wobei das Regelmodul (51) eine Sanftanlaufsteuerung aufweist, und wobei die Sanftanlaufsteuerung ausgebildet ist, um die Effektivspannungen in den Phasensträngen (10, 20, 30) beim Einschalten zu reduzieren und über eine vorbestimmte Zeitdauer bis zu einer vollen Netzspannung zu erhöhen.

8. Antrieb_(1) gemäß Anspruch 6 oder 7, wobei das Regelmodul (51) eine Teillaststeuerung aufweist, und wobei die Teillaststeuerung ausgebildet ist, um aus der Wirkleistung und einer Motornennleistung einen Teillastfaktor zu bestimmen, und bei einer festgestellten Unterschreitung eines Teillastfaktorgrenzwertes die Effektivspannungen in den Phasensträngen (10, 20, 30) entsprechend abzusenken.

9. Antrieb (1) gemäß einem der vorherigen Ansprüche, wobei alle gemessenen Strangströme und gemessenen Strangspannungen gegen einen gemeinsamen Bezugspunkt gemessen werden, insbesondere wobei der gemeinsame Bezugspunkt der Sternpunkt (40) ist und ein Bezugspotenzial aufweist, und wobei die Halbleiterschalter (V1, V2, V3) mittels eines Steuersignals angesteuert werden und das Steuersignal eine Potenzialdifferenz gegenüber dem Bezugspotenzial ist.

10. Antrieb (1) gemäß einem der vorherigen Ansprüche, wobei die Lastkontrollschaltung (5) ein Kommunikationsmodul (55) aufweist, und wobei das Kommunikationsmodul (55) ausgebildet ist, um Antriebskenndaten und/oder Antriebszustandsdaten an ein entferntes System (70) zu übertragen und/oder Kontrolldaten des entfernten Systems (70) zu empfangen.

11. Antrieb (1) gemäß Anspruch 10, wobei die Antriebskenndaten Motorkenndaten und/oder Getriebekenndaten eines elektronischen Typenschildes des Antriebs (1) umfassen.

12. Antrieb (1) gemäß Anspruch 10 oder 11, wobei die Antriebszustandsdaten Lastprofildaten und/oder Zustandsdaten zur vorausschauenden Instandhaltung umfassen.

13. Antrieb (1) gemäß einem der Ansprüche 10 bis 12, wobei der Antrieb (1) mittels der Kontrolldaten in der Leistung steuerbar und insbesondere ein- und abschaltbar ist.

14. Antrieb (1) gemäß einem der vorherigen Ansprüche, wobei der Drehstromasynchronmotor (2) einen Motorklemmenkasten (60) aufweist, und wobei die Lastkontrollschaltung (5) in oder an oder bei dem Motorklemmenkasten (60) angeordnet ist.

15. Antriebsstrang umfassend einen Antrieb (1) gemäß einem der vorherigen Ansprüche, wobei der Antriebsstrang den Drehstromasynchronmotor (2) und eine angetriebene mechanische Last (104) umfasst, insbesondere wobei der Antriebsstrang ferner ein Getriebe (102) und/oder weitere Kopplungsmittel (103) aufweisen kann.

## Claims

1. A drive (1) with integrated dynamic load control, comprising:
a mains-fed three-phase asynchronous motor (2) having three phase legs (10, 20, 30) in a star connection, the phase legs (10, 20, 30) each including at least one field winding (L1, L2, L3) having a winding start (11, 21, 31) on the phase conductor side and a winding end (12, 22, 32) and being connected in a common neutral point (40);
a load control circuit (5) having a regulating module (51) and at least one first ammeter (52), at least one first voltmeter (53) and at least one first and one second semiconductor switch (V1, V2);
wherein the first ammeter (52) is configured to detect a first phase current in a first phase leg (10) of the motor (2),
wherein the first voltmeter (53) is configured to detect a first phase voltage at the first phase leg (10), and
**characterized in that** the regulating module (51) is configured to calculate an active power of the first phase leg (10) and in particular a total active power of the motor (2) by means of the first phase current and the first phase voltage; and
wherein the first and second semiconductor switches (V1, V2) are arranged in two of the three phase legs (10, 20, 30) between the respective winding end (12, 22, 32) and the neutral point (40), and
wherein the regulating module (51) is configured to interrupt at least the two of the three phase legs (10, 20, 30) by means of the first and second semiconductor switches (V1, V2) when the regulating module (51) detects a faulty operating state by determining a limit value exceedance, and wherein the limit value exceedance is a limit value exceedance of the active power, the total active power or a torque calculated from the total active power.

2. The drive (1) according to claim 1, wherein the first ammeter (52) is configured to detect the first phase current in the first phase leg (10) between the winding end (12) and the neutral point (40).

3. The drive (1) according to claim 2, wherein the first ammeter (52) determines the first phase current by means of a first shunt (R1), and in particular wherein the first shunt (R1) is arranged in the first phase leg (10) in a series connection between the winding end (12) and the neutral point (40).

4. The drive (1) according to any of the preceding claims, wherein the first voltmeter (53) is configured to detect the first phase voltage in the first phase leg (10) between the winding start (11) of the field winding (L1) and the neutral point (40).

5. The drive (1) according to any of the preceding claims,
wherein the first ammeter (52) is configured to detect a respective associated phase current in each phase leg (10, 20, 30),
wherein the first voltmeter (53) is configured to detect a respective associated phase voltage at each phase leg (10, 20, 30), and
wherein the regulating module (51) is configured to calculate a total active power by means of the respective phase currents and the respective phase voltages; and
wherein the regulating module (51) is configured to interrupt at least two of the three phase legs (10, 20, 30) and in particular all phase legs by means of the semiconductor switches (V1, V2, V3) when a limit value exceedance has been detected.

6. The drive (1) according to claim 5, wherein a respective semiconductor switch (V1, V2, V3) is arranged in all phase legs (10, 20, 30) between the respective winding ends (12, 22, 32) and the neutral point (40), wherein the regulating module (51) is configured to control the semiconductor switches (V1, V2, V3) as power controllers such that effective voltages in the phase legs (10, 20, 30) can be adjusted by a phase-angle control by means of the semiconductor switches (V1, V2, V3).

7. The drive (1) according to claim 6, wherein the regulating module (51) includes a soft-start control, and wherein the soft-start control is configured to reduce the effective voltages in the phase legs (10, 20, 30) during switch-on and to increase them over a predetermined period of time up to a full mains voltage.

8. The drive (1) according to claim 6 or 7, wherein the regulating module (51) includes a partial load control, and wherein the partial load control is configured to determine a partial load factor from the active power and a rated motor power and to correspondingly lower the effective voltages in the phase legs (10, 20, 30) when it is determined that a partial load factor limit value is fallen below.

9. The drive (1) according to any of the preceding claims, wherein all measured phase currents and measured phase voltages are measured against a common reference point, in particular wherein the common reference point is the neutral point (40) and has a reference potential, and wherein the semiconductor switches (V1, V2, V3) are driven by means of a control signal and the control signal is a potential difference with respect to the reference potential.

10. The drive (1) according to any of the preceding claims, wherein the load control circuit (5) includes a communication module (55), and wherein the communication module (55) is configured to transmit drive characteristics and/or drive status data to a remote system (70) and/or to receive control data of the remote system (70).

11. The drive (1) according to claim 10, wherein the drive characteristics comprise motor characteristics and/or gearing characteristics of an electronic nameplate of the drive (1).

12. The drive (1) according to claim 10 or 11, wherein the drive status data comprises load profile data and/or status data on predictive maintenance.

13. The drive (1) according to any of claims 10 to 12, wherein the drive (1) can be controlled in terms of power and in particular can be switched on and off by means of the control data.

14. The drive (1) according to any of the preceding claims, wherein the three-phase asynchronous motor (2) includes a motor terminal box (60), and wherein the load control circuit (5) is arranged in or on or at the motor terminal box (60).

15. A drive train comprising a drive (1) according to any of the preceding claims, wherein the drive train comprises the three-phase asynchronous motor (2) and a driven mechanical load (104), in particular wherein the drive train may further include a gearing (102) and/or further coupling means (103).

## Revendications

1. Entraînement (1) à contrôle de charge dynamique intégré, comprenant :
un moteur asynchrone triphasé (2) alimenté par un réseau et présentant trois branches de phase (10, 20, 30) montées en étoile, les branches de phase (10, 20, 30) présentant chacune au moins un enroulement de champ (L1, L2, L3) avec un début d'enroulement (11, 21, 31) côté conducteur extérieur et une fin d'enroulement (12, 22, 32) et étant reliées en un point étoile (40) commun ;
un circuit de contrôle de charge (5) comprenant un module de régulation (51) et au moins un premier ampèremètre (52), au moins un premier voltmètre (53) et au moins un premier et un deuxième interrupteur à semi-conducteur (V1, V2) ;
le premier ampèremètre (52) étant réalisé pour détecter un premier courant de phase dans une première branche de phase (10) du moteur (2),
le premier voltmètre (53) étant réalisé pour détecter une première tension de phase au niveau de la première branche de phase (10), et
**caractérisé en ce que** le module de régulation (51) est réalisé de manière à calculer une puissance effective de la première branche de phase (10) et en particulier une puissance effective totale du moteur (2) au moyen du premier courant de phase et de la première tension de phase ; et
le premier et le deuxième interrupteur à semi-conducteur (V1, V2) étant agencés dans deux des trois branches de phase (10, 20, 30) entre les fins d'enroulement respectives (12, 22, 32) et le point étoile (40), et
le module de régulation (51) étant réalisé de manière à interrompre au moins deux des trois branches de phase (10, 20, 30) au moyen du premier et du deuxième interrupteur à semi-conducteur (V1, V2) lorsque le module de régulation (51) détecte un état de marche défectueux par la détermination d'un dépassement d'une valeur limite, et le dépassement de valeur limite étant un dépassement de valeur limite de la puissance effective, de la puissance effective totale ou d'un couple calculé à partir de la puissance effective totale.

2. Entraînement (1) selon la revendication 1, le premier ampèremètre (52) étant réalisé pour détecter le premier courant de phase dans la première branche de phase (10) entre la fin d'enroulement (12) et le point étoile (40).

3. Entraînement (1) selon la revendication 2, le premier ampèremètre (52) déterminant le premier courant de phase au moyen d'un premier shunt (R1), et le premier shunt (R1) étant en particulier agencé dans la première branche de phase (10) en couplage en série entre la fin d'enroulement (12) et le point étoile (40).

4. Entraînement (1) selon l'une des revendications précédentes, le premier voltmètre (53) étant réalisé de manière à détecter la première tension de phase dans la première branche de phase (10) entre le début d'enroulement (11) de l'enroulement de champ (L1) et le point étoile (40).

5. Entraînement (1) selon l'une des revendications précédentes,
le premier ampèremètre (52) étant réalisé de manière à respectivement détecter dans chaque branche de phase (10, 20, 30) un courant de phase associé,
le premier voltmètre (53) étant réalisé de manière à respectivement détecter au niveau de chaque branche de phase (10, 20, 30) une tension de phase associée, et
le module de régulation (51) étant réalisé de manière à calculer une puissance effective totale au moyen des courants de phase respectifs et des tensions de phase respectives ; et
le module de régulation (51) étant réalisé de manière à interrompre au moins deux des trois branches de phase (10, 20, 30) et en particulier toutes les branches de phase au moyen des interrupteurs à semi-conducteur (V1, V2, V3) lors de la détection d'un dépassement de valeur limite.

6. Entraînement (1) selon la revendication 5, un interrupteur à semi-conducteur (V1, V2, V3) respectif étant agencé dans toutes les branches de phase (10, 20, 30) entre les fins d'enroulement respectives (12, 22, 32) et le point étoile (40), le module de régulation (51) étant réalisé de manière à activer les interrupteurs à semi-conducteur (V1, V2, V3) en tant que régulateur de puissance de sorte que des tensions effectives dans les branches de phase (10, 20, 30) sont aptes à être ajustées par un réglage de l'angle de phase au moyen des interrupteurs à semi-conducteur (V1, V2, V3).

7. Entraînement (1) selon la revendication 6, le module de régulation (51) présentant une commande de mise en marche souple, et la commande de mise en marche souple étant réalisée de manière à réduire les tensions effectives dans les branches de phase (10, 20, 30) lors de la mise en marche et à les augmenter jusqu'à une pleine tension de réseau pendant une durée prédéterminée.

8. Entraînement (1) selon la revendication 6 ou 7, le module de régulation (51) présentant une commande de charge partielle, et la commande de charge partielle étant réalisée de manière à déterminer un facteur de charge partielle à partir de la puissance effective et d'une puissance nominale de moteur et à baisser les tensions effectives dans les branches de phase (10, 20, 30) de manière correspondante lors de la détection d'un sous-dépassement d'une valeur limite du facteur de charge partielle.

9. Entraînement (1) selon l'une des revendications précédentes, l'ensemble des courants de phase mesurés et des tensions de phase mesurées étant mesuré par rapport à un point de référence commun, le point de référence commun étant en particulier le point étoile (40) et comprenant un potentiel de référence, et les interrupteurs à semi-conducteur (V1, V2, V3) étant activés au moyen d'un signal de commande, et le signal de commande étant une différence de potentiel par rapport au potentiel de référence.

10. Entraînement (1) selon l'une des revendications précédentes, le circuit de contrôle de charge (5) présentant un module de communication (55), et le module de communication (55) étant réalisé de manière à transmettre des données caractéristiques d'entraînement et/ou des données d'état d'entraînement à un système distant (70) et/ou à recevoir des données de contrôle du système distant (70).

11. Entraînement (1) selon la revendication 10, les données caractéristiques d'entraînement comprenant des données caractéristiques de moteur et/ou des données caractéristiques de transmission d'une plaque de fabrication électronique de l'entraînement (1).

12. Entraînement (1) selon la revendication 10 ou 11, les données d'état d'entraînement comprenant des données de profil de charge et/ou des données d'état pour une maintenance prévisionnelle.

13. Entraînement (1) selon l'une des revendications 10 à 12, l'entraînement (1) étant apte à être commandé en puissance et en particulier à être mis en marche et arrêté au moyen des données de contrôle.

14. Entraînement (1) selon l'une des revendications précédentes, le moteur asynchrone triphasé (2) comprenant une boîte à bornes moteur (60), et le circuit de contrôle de charge (5) étant agencé dans ou sur ou à proximité de la boîte à bornes moteur (60).

15. Groupe propulseur comprenant un entraînement (1) selon l'une des revendications précédentes, le groupe propulseur comprenant le moteur asynchrone triphasé (2) et une charge mécanique entraînée (104), le groupe propulseur étant en particulier apte à présenter une transmission (102) et/ou d'autres moyens de couplage (103).
